# EUROPÄISCHE PATENTSCHRIFT

(11) **EP 1 774 267 B1**
(45) Veröffentlichungstag und Bekanntmachung des Hinweises auf die Patenterteilung: **09.07.2008**
(21) Anmeldenummer: 05763547.6
(22) Anmeldetag: 14.07.2005
(51) Int. Cl.: G01G 21/24, G01G 7/02

(54) **WÄGESYSTEM NACH DEM PRINZIP DER ELEKTROMAGNETISCHEN KRAFTKOMPENSATION**
WEIGHING SYSTEM THAT OPERATES ACCORDING TO THE PRINCIPLE OF ELECTROMAGNETIC FORCE COMPENSATION
SYSTEME DE PESEE FONCTIONNANT SELON LE PRINCIPE DE L'EQUILIBRAGE ELECTROMAGNETIQUE DE FORCES

(30) Priorität: 27.07.2004 DE 20041179 U
(43) Veröffentlichungstag der Anmeldung: 18.04.2007
(73) Patentinhaber: SARTORIUS AG, 37075 Göttingen (DE)
(72) Erfinder: WALTER, Fabian, 37077 Göttingen (DE); KUHLMANN, Otto, 37085 Göttingen (DE); FLEISCHER, Peter, 37085 Göttingen (DE); LANGNER, Wilfried, 37120 Bovenden (DE)
(86) Internationale Anmeldenummer: PCT/EP2005/007662
(87) Internationale Veröffentlichungsnummer: WO 2006/010485

(56) Entgegenhaltungen:
- DE-A1- 3 127 939
- DE-C1- 19 540 782

## Beschreibung

Die Erfindung bezieht sich auf ein Wägesystem nach dem Prinzip der elektromagnetischen Kraftkompensation mit zwei Lenkern, die als Parallelführung einen Lastaufnehmer mit einem gehäusefesten Basisbereich verbinden, mit einem Winkelhebel, der am Basisbereich gelagert ist und an dessen kurzem Hebelarm über ein Koppelelement die vom Lastaufnehmer übertragene Gewichtskraft angreift und an dessen langem Hebelarm eine Spule befestigt ist, die in den Luftspalt eines Permanentmagnetsystems hineinragt.

Ein Wägesystem dieser Art ist zum Beispiel aus der DE 31 27 939 C2 bekannt. Auch in der DE 195 40 782 C1 ist ein solches Wägesystem beschrieben, das zusätzlich einen zweiten Winkelhebel aufweist. Beide Wägesysteme beanspruchen jedoch eine relativ große Grundfläche, sodass sie für Anwendungen, bei denen mehrere Wägesysteme eng nebeneinander angeordnet werden sollen, nicht optimal sind.

Aufgabe der Erfindung ist es daher, ein Wägesystem der eingangs genannten Art anzugeben, das nur eine geringe Grundfläche beansprucht.

Erfindungsgemäß wird dies dadurch erreicht, dass der lange Hebelarm als vertikaler Hebelarm ausgebildet ist und sich zumindest teilweise in den Bereich unterhalb der Lenker der Parallelführung erstreckt und dass das Permanentmagnetsystem ebenfalls unterhalb der Lenker der Parallelführung angeordnet ist.

Die bisher übliche Anordnung von Winkelhebel und Permanentmagnetsystem nebeneinander im Bereich zwischen den Lenkern wird also verlassen; stattdessen werden das Permanentmagnetsystem und der lange Hebelarm mit Spule in den Bereich unterhalb der Lenker verlegt. Zusammen mit kurzen Lenkern ergibt sich so ein Wägesystem mit geringer Grundfläche. Trotz der geringen horizontalen Maße des Wägesystems ist die Länge des langen Hebelarms praktisch nicht begrenzt, da ein längerer langer Hebelarm nur zu einer vergrößerten Bauhöhe führt. Dadurch kann schon mit einem Hebel ein großes Übersetzungsverhältnis realisiert werden.

### Vorteilhafte Ausgestaltungen ergeben sich aus den abhängigen Ansprüche

Ist in einer besonders vorteilhaften Ausgestaltung der Lastaufnehmer des Wägesystems schmaler ausgebildet als der Basisbereich, so können mehrere Wägesysteme besonders eng nebeneinander in einer Reihe angeordnet sein: jedes zweite Wägesystem wird dann um 180° um eine vertikale Achse gedreht angeordnet, sodass sich der Lastaufnehmer des einen Wägesystems jeweils neben dem Basisbereich des benachbarten Wägesystems befindet. Dadurch ist der minimale seitliche Abstand benachbarter Wägesysteme nicht mehr durch die Breite des Basisbereiches gegeben, sondern durch die (kleinere) halbe Summe der Breite des Basisbereiches und der Breite des Lastaufnehmers. Trotzdem verbleibt ein relativ breiter Basisbereich zur Abstützung der Lenker gegenüber seitlichen Kräften auf die Waagschale.

Zwei benachbarte, gegeneinander um 180° gedreht eingebaute Wägesysteme können auch zu einem Paar zusammengefasst sein. Dadurch kann das Permanentmagnetsystem jedes Wägesystems so breit sein wie zwei Wägesysteme und die beiden Permanentmagnetsysteme des Paares können auch zu einem gemeinsamen Permanentmagnetsystem mit zwei Luftspalten zusammengefasst sein.

Die Erfindung wird im Folgenden anhand der Figuren beschrieben. Dabei zeigt:
Figur 1 eine erste Ausgestaltung des Wägesystems schematisch in Seitenansicht,
Figur 2 eine zweite Ausgestaltung des Wägesystems schematisch in Seitenansicht,
Figur 3 eine dritte Ausgestaltung des Wägesystems schematisch in Seitenansicht,
Figur 4 die Ausgestaltung gemäß Figur 1 in einer wirklichen Ausführungsform,
Figur 5 die Anordnung von zwei Wägesystemen gemäß Figur 4 in einer perspektivischen Ansicht und
Figur 6 die Anordnung von zwei Wägesystemen gemäß Figur 4 in Aufsicht.

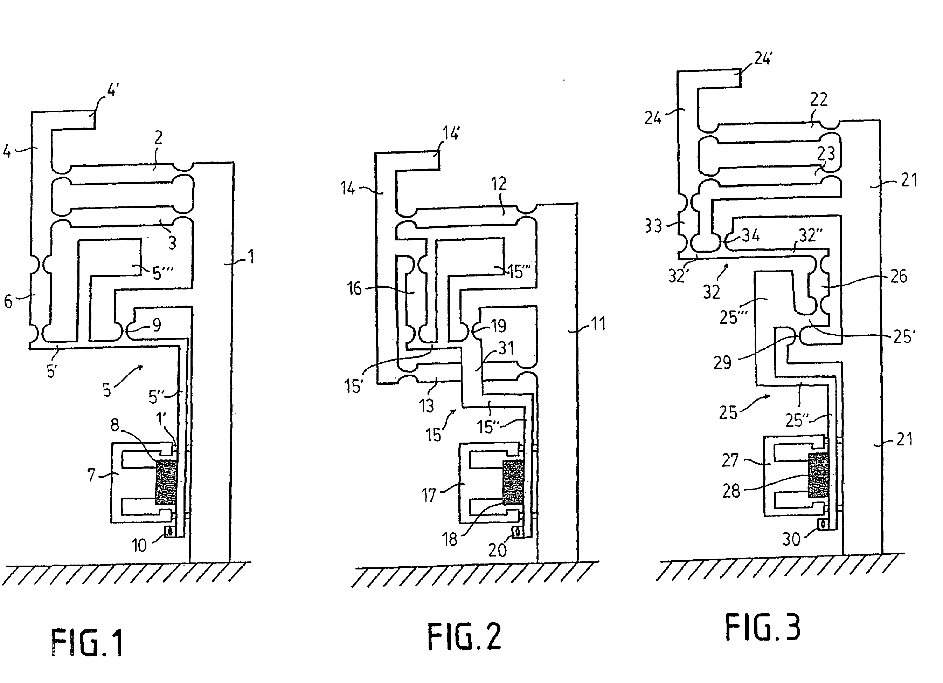

Das in Figur 1 nur sehr schematisch in Seitenansicht dargestellte Wägesystem besteht aus einem Basisbereich 1, zwei Lenkern 2 und 3, einem Lastaufnehmer 4, einem Winkelhebel 5, einem Koppelelement 6 zur Übertragung der Gewichtskraft auf den kurzen Hebelarm 5' des Winkelhebels, einem Permanentmagnetsystem 7 und einer Spule 8, die am langen Hebelarm 5" des Winkelhebels befestigt ist und sich im Luftspalt des Permanentmagnetsystems 7 befindet. Der Winkelhebel 5 ist durch eine Materialdünnstelle 9 am Basisbereich 1 verschwenkbar gelagert. Die Gelenkstellen an den Lenkern 2 und 3 und am Koppelelement 6 sind durch entsprechende Materialdünnstellen angedeutet. Der Schwerpunkt des Winkelhebels 5 zusammen mit der Spule 8 ist durch ein Obergewicht 5''' so verschoben, dass er wenigstens näherungsweise in der Höhe des Drehpunktes (Materialdünnstelle 9) liegt. Das Permanentmagnetsystem 7 ist durch Stützen 1' mit dem Basisteil 1 verbunden. Weiter ist in Figur 1 eine Fahne 10 mit Schlitz erkennbar, die Bestandteil einer - nicht weiter dargestellten - optischen Abtastung zur Regelung des Kompensationsstromes durch die Spule 8 ist. Außerdem ist am Lastaufnehmer 4 ein waagerechter Vorsprung 4' als Andeutung einer Waagschale eingezeichnet. - Das im Vorstehenden kurz beschriebene Wägesystem ist in seiner Funktionsweise allgemein bekannt, sodass auf eine detaillierte Beschreibung verzichtet werden kann. Die erfindungsgemäße geometrische Anordnung ist - wie aus der Figur ersichtlich - dadurch charakterisiert, dass der komplette Winkelhebel 5 unterhalb der Lenker 2 und 3 der Parallelführung angeordnet ist, dass sein langer Hebelarm 5" sich vertikal erstreckt und auch das Permanentmagnetsystem 7 sich unterhalb der Lenker der Parallelführung befindet. Durch diese geometrische Anordnung kann die horizontale Ausdehnung in der Zeichenebene sehr gering gehalten werden und auch senkrecht zur Zeichenebene benötigt das Wägesystem wenig Platz. Der lange Hebelarm 5" des Winkelhebels kann trotzdem praktisch beliebig lang ausgestaltet sein, um eine große Kraftuntersetzung zu erreichen.

Die in Figur 2 schematisch in Seitenansicht dargestellte zweite Ausgestaltung des Wägesystems unterscheidet sich von der bisher beschriebenen ersten Ausgestaltung dadurch, dass sich der kurze Hebelarm 15' des Winkelhebels 15 und das Koppelelement 16 oberhalb des unteren Lenkers 13 befinden. Dies hat den Vorteil, dass der vertikale Abstand der Lenker 12 und 13 größer gewählt werden kann. Dadurch werden die Kräfte in den Lenkern bei außermittiger Belastung der Waagschale geringer. Dieser Vorteil wird erkauft durch den Nachteil, dass der Winkelhebel 15 bei 31 den unteren Lenker 13 kreuzt, dass dort also die Breite (senkrecht zur Zeichenebene) dieser beiden Teile reduziert sein muss. - Die bisher nicht erwähnten Teile mit den Bezugszeichen 11, 12, 14 und 17...20 entsprechen den Teilen mit den Bezugszeichen 1, 2, 4 und 7...10 aus Figur 1.

Die in Figur 3 schematisch in Seitenansicht dargestellte dritte Ausgestaltung des Wägesystems unterscheidet sich durch das Vorhandensein eines zusätzlichen Übersetzungshebels 32 von der ersten Ausgestaltung. Der Übersetzungshebel ist mittels einer Materialdünnstelle 34 verschwenkbar am Basisbereich 21 gelagert. Am kurzen Hebelarm 32' des Übersetzungshebels wird die Gewichtskraft vom Lastaufnehmer 24 über ein Koppelelement 33 eingeleitet, am Ende des langen Hebelarms 32" wird die untersetzte Kraft über ein Koppelelement 26 an den Winkelhebel 25 übertragen. Durch diesen zusätzlichen Übersetzungshebel 32 ist also im Zusammenspiel mit dem Winkelhebel 25 eine deutlich höhere Kraftuntersetzung möglich. - Die bisher nicht erwähnten Teile mit den Bezugszahlen 22, 23, 27...30 entsprechen den Teilen mit den Bezugszahlen 2, 3, 7...10 aus Figur 1.

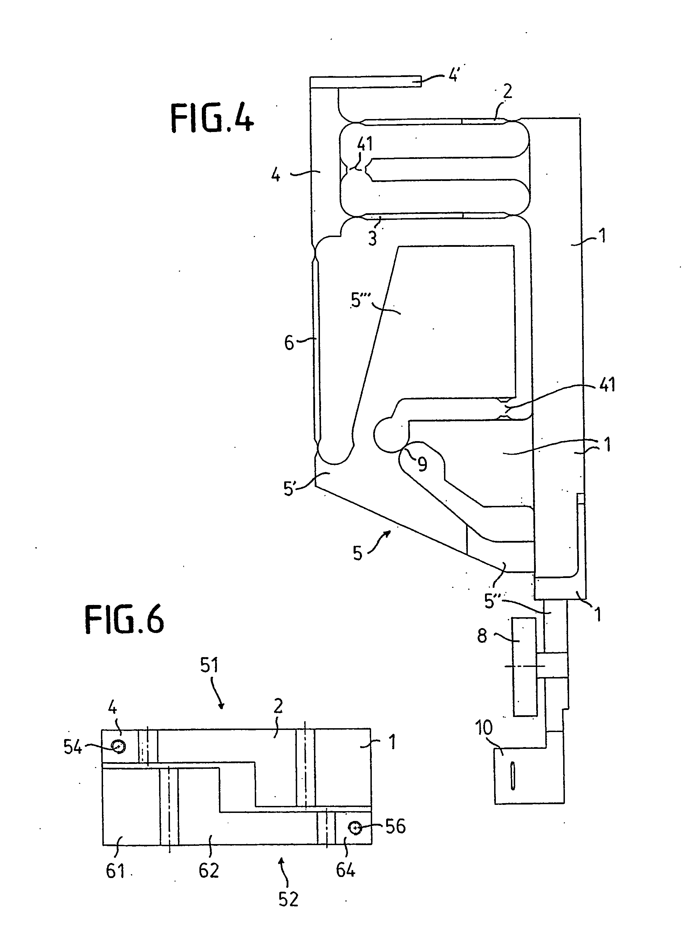

In den bisherigen Figuren 1 bis 3 ist das Wägesystem nur ganz schematisch dargestellt. In Figur 4 ist nun eine wirkliche Ausführungsform dargestellt, die der schematischen Anordnung gemäß Figur 1 entspricht. Funktionsgleiche Teile wie in Figur 1 sind mit den gleichen Bezugszahlen bezeichnet, auch wenn sie geometrisch anders gestaltet sind. Man erkennt wieder den Basisbereich 1, die Lenker 2 und 3, den Lastaufnehmer 4, das Koppelelement 6, den Winkelhebel 5 und die Spule 8. Der lange Hebelarm 5" des Winkelhebels ist schmaler als das restliche Wägesystem ausgeführt und verläuft teilweise in einer - in Figur 4 nicht erkennbaren - Freifräsung im Basisbereich 1. Der Basisbereich 1, die Lenker 2 und 3, der Lastaufnehmer 4, der Winkelhebel 5, das Koppelelement 6 und die Fahne 10 sind einstückig aus einem Metallblock herausgearbeitet - zum Beispiel durch Fräsen oder Funkenerodieren. Um dieses Teil während des Fertigungsvorganges und bei der Montage der restlichen Teile - Spule, Waagschale etc. - zu schützen, sind Fixierdünnstellen 41 vorgesehen, die erst nach der Montage aufgetrennt werden; in Figur 4 sind diese Fixierdünnstellen bereits aufgetrennt gezeichnet. Das Permanentmagnetsystem ist in Figur 4 der Übersichtlichkeit halber nicht eingezeichnet.

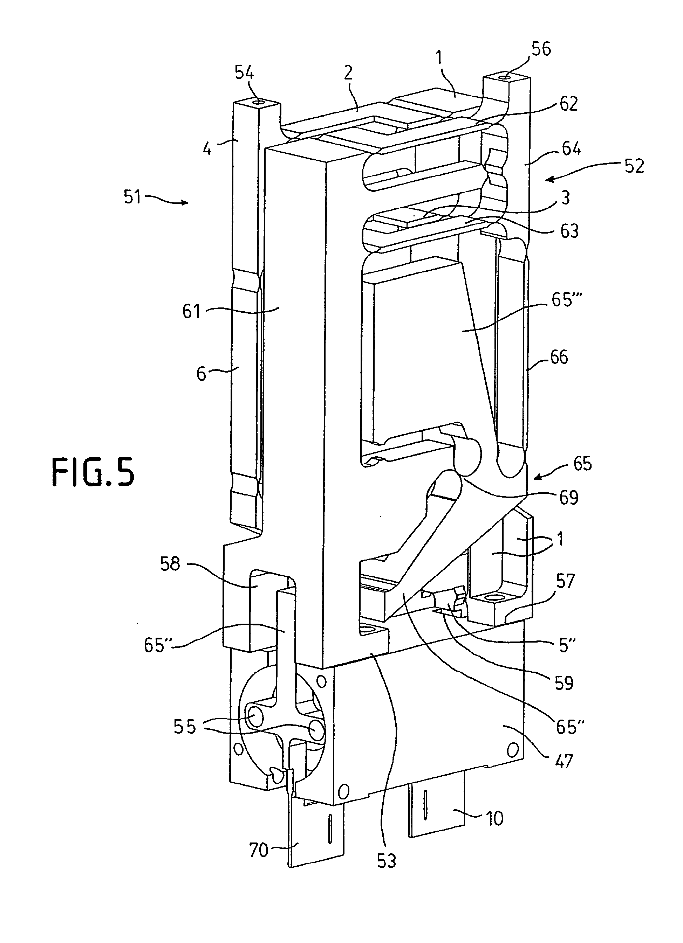

In den Figuren 5 und 6 ist nun eine platzsparende Anordnung von zwei Wägesystemen gemäß Figur 4 gezeigt, die zu einem Wägesystempaar zusammengefasst sind. Figur 5 ist eine perspektivische Ansicht, Figur 6 ist eine Aufsicht. Das hintere Wägesystem 51 ist in der Ansicht dargestellt, wie es auch in Figur 4 gezeichnet ist; man erkennt den Lastaufnehmer 4, den oberen Lenker 2, den Basisbereich 1, das Koppelelement 6, die Fahne 10 und - etwas verborgen - den unteren Lenker 3. Das vordere Wägesystem 52 ist genauso aufgebaut wie das hintere Wägesystem 51, es ist nur um 180° um eine senkrechte Achse gedreht montiert. Man erkennt in Figur 5 vom vorderen Wägesystem 52 den Basisbereich 61, die Lenker 62 und 63, den Lastaufnehmer 64, den Winkelhebel 65 mit seinem langen Hebelarm 65" und seinem Obergewicht 65"', das Koppelelement 66, die Materialdünnstelle 69 zur Lagerung des Winkelhebels 65 und die Fahne 70. Die Spule für die elektromagnetische Kraftkompensation ist nicht erkennbar, man sieht nur die Befestigungslöcher 55 am langen Hebelarm 65". Weiter erkennt man das Permanentmagnetsystem 47, das auf seiner einen - in Figur 5 linken - Seite einen Luftspalt für die Spule des vorderen Wägesystems 52 aufweist und das auf seiner anderen - in Figur 5 rechten - Seite einen Luftspalt für die Spule des hinteren Wägesystems 51 aufweist. Der äußere Weicheisenrückschluss des Permanentmagnetsystems 47 ist rechteckig ausgebildet und dient gleichzeitig zur Befestigung der beiden Basisbereiche. Dazu weist der Basisbereich 61 des vorderen Wägesystems 52 einen Befestigungsfuß 53 auf und der Basisbereich 1 des hinteren Wägesystems 51 einen Befestigungsfuß 57.

In Figur 5 erkennt man weiter, dass der lange Hebelarm 65" des Winkelhebels 65 schmaler ist als die übrigen Teile des vorderen Wägesystems 52 und in einer Freifräsung 58 im Basisteil 61 verläuft. Diese Freifräsung war schon im Zusammenhang mit der Beschreibung der Figur 4 erwähnt. Vom langen Hebelarm 5" des hinteren Wägesystems 51 erkennt man in Figur 5 nur ein kurzes Stück in der Freifräsung 59.

In Figur 5 und besser noch in Figur 6 in der Aufsicht erkennt man, dass der Lastaufnehmer 4 bzw. 64 schmaler ausgebildet ist als der Basisbereich 1 bzw. 61 des jeweiligen Wägesystems 51 bzw. 52. Dadurch ist bei vorgegebener Breite des Wägesystempaares 51/ 52 eine größere Breite des Basisbereiches möglich und damit eine breitere Abstützung der Lenker, was sich bei seitlichen Kräften auf den Lastaufnehmer günstig auswirkt. Bei der in Figur 5 und 6 gezeigten Ausführungsform ändert sich die Breite der Lenker in einer Stufe. Selbstverständlich ist auch ein allmählicher Breitenübergang vom Basisbereich zum Lastaufnehmer möglich. Weiter ist in der Ausführungsform gemäß Figur 5 und 6 die Breitenstufe in den Lenkern nur einseitig vorgesehen. Dies hat den Vorteil, dass die Außenkontur des Wägesystempaares 51/ 52 genau rechteckig ist, was zusammen mit dem ebenfalls rechteckigen Permanentmagnetsystem 47 zu einer sehr guten Platzausnutzung führt, wenn mehrere Wägesystempaare 51/ 52 in Querrichtung der Lenker dicht nebeneinander angeordnet werden sollen. Selbstverständlich sind aber auch Lenkerformen möglich, bei denen sich die Breite des Lenkers symmetrisch auf beiden Seiten ändert, also in Aufsicht zum Beispiel in Form eines Trapezes oder eines "T".

Die Anbringungsmöglichkeit für eine Waagschale ist bei dem Wägesystempaar in Figur 5 und 6 nur durch eine Gewindebohrung 54 bzw. 56 angedeutet. Je nach Anwendungsfall kann dort eine Waagschale direkt oberhalb der Gewindebohrung angebracht sein, oder die Waagschale wird an einem vorkragenden Ausleger zum Beispiel so angebracht, dass alle Waagschalen einer Reihe nebeneinander angeordneter Wägesystempaare in einer fluchtenden Linie angeordnet sind.

Der in allen Figuren der Übersichtlichkeit halber nicht eingezeichnete gehäusefeste Teil des optischen Lagensensors ist auf der Unterseite des Permanentmagnetsystems 47 befestigt. Er enthält zum Beispiel eine Leuchtdiode, die den Schlitz in der Fahne 10 bzw. 70 beleuchtet und zwei Fotodioden, die auf das durch den Schlitz hindurchtretende Licht ansprechen und in bekannter Weise den Strom durch die Spule der elektromagnetischen Kraftkompensation regeln. Durch die Anordnung des Lagensensors unterhalb des Permanentmagnetsystems 47 ist der Hebelarm für den Schlitz besonders groß, sodass der Lagensensor eine hohe Empfindlichkeit aufweist.

### Bezugszeichenliste:

- 1: Basisbereich
- 1': Stützen
- 2: Lenker
- 3: Lenker
- 4: Lastaufnehmer
- 4': Waagerechter Vorsprung als Andeutung einer Waagschale
- 5: Winkelhebel
- 5': Kurzer Hebelarm des Winkelhebels
- 5": Langer Hebelarm des Winkelhebels
- 5"': Obergewicht des Winkelhebels
- 6: Koppelelement
- 7: Permanentmagnetsystem
- 8: Spule
- 9: Materialdünnstelle
- 10: Fahne
- 11: Basisbereich
- 12: Lenker
- 13: Lenker
- 14: Lastaufnehmer
- 14': Waagerechter Vorsprung als Andeutung einer Waagschale
- 15: Winkelhebel
- 15': Kurzer Hebelarm des Winkelhebels
- 15": Langer Hebelarm des Winkelhebels
- 15''': Obergewicht des Winkelhebels
- 16: Koppelelement
- 17: Permanentmagnetsystem
- 18: Spule
- 19: Materialdünnstelle
- 20: Fahne
- 21: Basisbereich
- 22: Lenker
- 23: Lenker
- 24: Lastaufnehmer
- 24': Waagerechter Vorsprung als Andeutung einer Waagschale
- 25: Winkelhebel
- 25': Kurzer Hebelarm des Winkelhebels
- 25'': Langer Hebelarm des Winkelhebels
- 25''': Obergewicht des Winkelhebels
- 26: Koppelelement
- 27: Permanentmagnetsystem
- 28: Spule
- 29: Materialdünnstelle
- 30: Fahne
- 31: (Kreuzungspunkt)
- 32: Zusätzlicher Übersetzungshebel
- 32': Kurzer Hebelarm des Übersetzungshebels
- 32": Langer Hebelarm des Übersetzungshebels
- 33: Koppelelement
- 34: Materialdünnstelle
- 41: Fixierdünnstellen
- 47: Permanentmagnetsystem
- 51: Hinteres Wägesystem
- 52: Vorderes Wägesystem
- 53: Befestigungsfuß
- 54: Gewindebohrung
- 55: Befestigungslöcher
- 56: Gewindebohrung
- 57: Befestigungsfuß
- 58: Freifräsung
- 59: Freifräsung
- 61: Basisbereich
- 62: Lenker
- 63: Lenker
- 64: Lastaufnehmer
- 65: Winkelhebel
- 65": Langer Hebelarm des Winkelhebels
- 65'": Obergewicht des Winkelhebels
- 66: Koppelelement
- 69: Materialdünnstelle
- 70: Fahne

## Patentansprüche

1. Wägesystem nach dem Prinzip der elektromagnetischen Kraftkompensation mit zwei Lenkern, die als Parallelführung einen Lastaufnehmer mit einem gehäusefesten Basisbereich verbinden, mit einem Winkelhebel, der am Basisbereich gelagert ist und an dessen kurzem Hebelarm über ein Koppelelement die vom Lastaufnehmer übertragene Gewichtskraft angreift und an dessen langem Hebelarm eine Spule befestigt ist, die in den Luftspalt eines Permanentmagnetsystems hineinragt, **dadurch gekennzeichnet, dass** der lange Hebelarm (5", 15", 25", 65") als vertikaler Hebelarm ausgebildet ist und sich zumindest teilweise in den Bereich unterhalb der Lenker (2, 3; 12, 13; 22 ,23; 62, 63) der Parallelführung erstreckt und dass das Permanentmagnetsystem (7, 17, 27, 47) ebenfalls unterhalb der Lenker (2, 3; 12, 13; 22, 23; 62, 63) der Parallelführung angeordnet ist.

2. Wägesystem nach Anspruch 1, **dadurch gekennzeichnet, dass** der Winkelhebel (5,25,65) komplett unterhalb der Lenker (2, 3; 22, 23; 62, 63) der Parallelführung angeordnet ist.

3. Wägesystem nach Anspruch 1, **dadurch gekennzeichnet, dass** der zur Regelung des Kompensationsstromes notwendige Lagensensor 10, 20, 30, 70) unterhalb des Permanentmagnetsystems (7, 17, 27, 47) angeordnet ist.

4. Wägesystem nach Anspruch 1, **dadurch gekennzeichnet, dass** der Winkelhebel (5, 15, 25, 65) so gestaltet ist, dass sein Schwerpunkt wenigstens näherungsweise in der Höhe seines Drehpunktes liegt.

5. Wägesystem nach Anspruch 1, **dadurch gekennzeichnet, dass** der Basisbereich (1, 11, 21, 61), die Lenker (2, 3; 12, 13; 22, 23; 62, 63), der Lastaufnehmer (4, 14, 24, 64), der Winkelhebel (5, 15, 25, 65) und das Koppelelement (6, 16, 26, 66) einstückig aus einem Metallblock herausgearbeitet sind.

6. Wägesystem nach Anspruch 1, **dadurch gekennzeichnet, dass** das Wägesystem einen zusätzlichen Übersetzungshebel (32) aufweist.

7. Wägesystem nach Anspruch 1, **dadurch gekennzeichnet, dass** der Lastaufnehmer (4, 64) schmaler ausgebildet ist als der Basisbereich (1, 61).

8. Anordnung von mindestens zwei Wägesystemen nach einem der Ansprüche 1-7, **dadurch gekennzeichnet, dass** die Wägesysteme so seitlich nebeneinander angeordnet sind, dass sich der Lastaufnehmer (4, 64) des einen Wägesystems neben dem Basisbereich (61, 1) des anderen Wägesystems befindet.

9. Anordnung von mindestens zwei Wägesystemen nach Anspruch 8, **dadurch gekennzeichnet, dass** jeweils zwei benachbarte Wägesysteme zu einem Wägesystempaar zusammengefasst sind.

10. Anordnung von mindestens zwei Wägesystemen nach Anspruch 9, **dadurch gekennzeichnet, dass** die beiden Permanentmagnetsysteme eines Wägesystempaares zu einem Permanentmagnetsystem (47) mit zwei Luftspalten zusammengefasst sind.

## Claims

1. Weighing system according to the principle of electromagnetic force compensation, with two links, which as parallel guide connect a load receiver with a base region fixed relative to the housing, with an angle lever mounted at the base region, at the short lever arm of which lever the weight force transmitted by the load receiver engages by way of a coupling element and at the long lever arm of which lever there is fastened a coil which protrudes into the air gap of a permanent magnet system, **characterised in that** the long lever arm (5", 15", 25", 65") is constructed as a vertical lever arm and extends at least partly into the region below the links (2, 3; 12, 13; 22, 23; 62, 63) of the parallel guide and that the permanent magnet system (7, 17, 27, 47) is similarly arranged below the links (2, 3; 12, 13; 22, 23; 62, 63) of the parallel guide.

2. Weighing system according to claim 1, **characterised in that** the angle lever (5, 25, 65) is arranged completely below the links (2, 3; 22, 23; 62, 63) of the parallel guide.

3. Weighing system according to claim 1, **characterised in that** the position sensor (10, 20, 30, 70) necessary for regulation of the compensation current is arranged below the permanent magnet system (7, 17, 27, 47).

4. Weighing system according to claim 1, **characterised in that** the angle lever (5, 15, 25, 65) is so shaped that its centre of gravity lies approximately at the level of its fulcrum.

5. Weighing system according to claim 1, **characterised in that** the base region (1, 11, 21, 61), the links (2, 3; 12, 13; 22, 23; 62, 63), the load receiver (4, 14, 24, 64), the angle lever (5, 15, 25, 65) and the coupling element (6, 16, 26, 66) are integrally formed from a metal block.

6. Weighing system according to claim 1, **characterised in that** the weighing system comprises an additional translation lever (32).

7. Weighing system according to claim 1, **characterised in that** the load receiver (4, 64) is of narrower construction than the base region (1, 61).

8. Arrangement of at least two weighing systems according to any one of claims 1 to 7, **characterised in that** the weighing systems are so arranged laterally adjacent to one another that the load receiver (4, 64) of one weighing system is disposed near the base region (61, 1) of the other weighing system.

9. Arrangement of at least two weighing systems according to claim 8, **characterised in that** in each instance two adjacent weighing systems are combined to form a weighing system pair.

10. Arrangement of at least two weighing systems according to claim 9, **characterised in that** the two permanent magnet systems of one weighing system pair are combined with two air gaps to form a permanent magnet system (47).

## Revendications

1. Système de pesée fonctionnant selon le principe de la compensation de forces électromagnétique avec deux bras qui relient comme un guidage parallèle un récepteur de charge à une zone de base fixée au boîtier, avec un levier coudé qui est logé sur la zone de base et sur le bras de levier court duquel s'applique par le biais d'un élément de couplage la force massique transmise par le récepteur de charge et sur le bras de levier long duquel est fixée une bobine qui pénètre dans l'entrefer d'un système à aimants permanents, **caractérisé en ce que** le bras de levier long (5'', 15'', 25'', 65'') est réalisé comme un bras de levier vertical et s'étend au moins en partie dans la zone au-dessous des bras (2, 3 ; 12, 13 ; 22, 23 ; 62, 63) du guidage parallèle et **en ce que** le système à aimants permanents (7, 17, 27, 47) est également disposé au-dessous des bras (2, 3 ; 12, 13 ; 22, 23 ; 62, 63) du guidage parallèle.

2. Système de pesée selon la revendication 1, **caractérisé en ce que** le levier coudé (5, 25, 65) est disposé complètement au-dessous des bras (2, 3 ; 22, 23 ; 62, 63) du guidage parallèle.

3. Système de pesée selon la revendication 1, **caractérisé en ce que** le capteur de position (10, 20, 30, 70) nécessaire à la régulation du courant compensateur est disposé au-dessous du système à aimants permanents (7, 17, 27, 47).

4. Système de pesée selon la revendication 1, **caractérisé en ce que** le levier coudé (5, 15, 25, 65) est conçu de telle sorte que son centre de gravité se trouve au moins approximativement à hauteur de son centre de rotation.

5. Système de pesée selon la revendication 1, **caractérisé en ce que** la zone de base (1, 11, 21, 61), les bras (2, 3 ; 12, 13 ; 22, 23 ; 62 ; 63), le récepteur de charge (4, 14, 24, 64), le levier coudé (5, 15, 25, 65) et l'élément de couplage (6, 16, 26, 66) sont façonnés d'un seul tenant dans un bloc métallique.

6. Système de pesée selon la revendication 1, **caractérisé en ce que** le système de pesée présente un levier de transmission (32) supplémentaire.

7. Système de pesée selon la revendication 1, **caractérisé en ce que** le récepteur de charge (4, 64) est réalisé de manière plus étroite que la zone de base (1, 61).

8. Ensemble d'au moins deux systèmes de pesée selon l'une quelconque des revendications 1 à 7, **caractérisé en ce que** les systèmes de pesée sont disposés latéralement l'un à côté de l'autre de sorte que le récepteur de charge (4, 64) d'un système de pesée se trouve à côté de la zone de base (61, 1) de l'autre système de pesée.

9. Ensemble d'au moins deux systèmes de pesée selon la revendication 8, **caractérisé en ce que** respectivement deux systèmes de pesée contigus sont réunis pour former une paire de systèmes de pesée.

10. Ensemble d'au moins deux systèmes de pesée selon la revendication 9, **caractérisé en ce que** les deux systèmes à aimants permanents d'une paire de systèmes de pesée sont réunis pour former un système à aimants permanents (47) avec deux entrefers.
